# EUROPEAN PATENT APPLICATION

(11) **EP 4 647 921 A1**
(43) Date of publication of application: **12.11.2025**
(21) Application number: 24215658.6
(22) Date of filing: 27.11.2024
(51) Int. Cl.: G06F 12/02

(54) **CONTROLLER AND STORAGE DEVICE**

(30) Priority: 07.05.2024 KR 20240059667
(71) Applicant: SK hynix Inc., Bubal-eub Icheon-si Gyeonggi-do 17336 (KR)
(72) Inventor: YUN, Jang Hun, Icheon-si, Gyeonggi-do 17336 (KR)
(74) Representative: Isarpatent

(57) **Abstract**

According to embodiments of the present disclosure, booting may be performed using different firmware based on the usage environment information of a storage device, and control may be performed by differently setting a processing delay time for the host device's commands and the operation priority for the reliability or stability of the storage device, thereby maintaining the operational stability of the storage device and preventing or minimizing the degradation of operating performance depending on the usage environment.

## Description

### TECHNICAL FIELD

The embodiments of the present disclosure relate to a controller and a storage device.

### BACKGROUND

A storage device may include at least one memory storing data. In addition, a storage device may include a controller which controls an operation of the at least one memory.

The controller may control the operation of the memory based on an external command input from the outside. In addition, the controller may control the operation of the memory based on an internal command.

The memory and controller of a storage device may be made of semiconductor chips, and the operating performance of the storage device may deteriorate depending on various usage environments such as high temperature, low temperature, high pressure, and low pressure.

### SUMMARY

Embodiments of the present disclosure may provide a configuration capable of maintaining a reliability of a storage device in various usage environments and preventing deterioration in the operating performance of storage devices.

Embodiments of the present disclosure may provide a storage device including at least one memory including a plurality of data storage blocks and at least one firmware storage block storing a plurality of firmwares, and a controller configured to acquire temperature information, and when the temperature information is within a first range, read a first firmware among the plurality of firmwares, perform booting, and operate in a first mode, and when the temperature information is within a second range different from the first range, read a second firmware among the plurality of firmwares, perform booting, and operate in a second mode.

Embodiments of the present disclosure may provide a storage device including at least one memory including a plurality of data storage blocks, and a controller configured to control an operation of the at least one memory and perform a background operation, wherein a first processing delay time required to process an external command received while performing the background operation in a first temperature range is less than a second processing delay time required to process an external command received while performing the background operation in a second temperature range different from the first temperature range.

Embodiments of the present disclosure may provide a controller including a booting controller configured to perform booting, based on status information of the memory, by reading a first firmware from a memory or by reading a second firmware from the memory, and a background operation controller configured to control a background operation of the memory.

According to embodiments of the present disclosure, it is possible to maintain the reliability of the operation of a storage device depending on the usage environment of the storage device and prevent the operating performance of the storage device from being deteriorated.

### BRIEF DESCRIPTION OF THE DRAWINGS

FIG. 1 is a diagram illustrating a configuration of a storage device according to the embodiments of the present disclosure.
FIG. 2 is a diagram illustrating a storage block included in the memory of a storage device and an operation method during booting, according to embodiments of the present disclosure.
FIGS. 3 and 4 are diagrams illustrating booting and operating methods of a storage device in a first temperature range, according to embodiments of the present disclosure.
FIGS. 5 and 6 are diagrams illustrating booting and operating methods of a storage device in a second temperature range, according to embodiments of the present disclosure.
FIG. 7 is a diagram illustrating a comparison of booting and operating methods of a storage device according to embodiments of the present disclosure in a first temperature range and a second temperature range.
FIG. 8 is a diagram illustrating processing a write command of a storage device in a second mode according to embodiments of the present disclosure.
FIG. 9 is a diagram illustrating processing a read command of a storage device in a first mode and a second mode according to embodiments of the present disclosure.
FIG. 10 is a diagram illustrating another storage block included in the memory of a storage device and a configuration of a controller according to embodiments of the present disclosure.

### DETAILED DESCRIPTION

In the following description of embodiments of the present disclosure, reference will be made to the accompanying drawings in which it is shown by way of illustration specific embodiments that can be implemented, and in which the same reference numerals and signs can be used to designate the same or like components even when they are shown in different accompanying drawings from one another. Further, in the following description of embodiments of the present disclosure, detailed descriptions of well-known functions and components incorporated herein will be omitted when it is determined that the description may make the subject matter in some embodiments of the present disclosure rather unclear. The terms such as "including", "having", "containing", "constituting" "made up of", and "formed of" used herein are generally intended to allow other components to be added unless the terms are used with the term "only". As used herein, singular forms are intended to include plural forms unless the context clearly indicates otherwise.

Terms, such as "first", "second", "A", "B", "(A)", or "(B)" may be used herein to describe elements of the present disclosure. Each of these terms is not used to define essence, order, sequence, or number of elements etc., but is used merely to distinguish the corresponding element from other elements.

When it is mentioned that a first element "is connected or coupled to", "contacts or overlaps" etc. a second element, it should be interpreted that, not only can the first element "be directly connected or coupled to" or "directly contact or overlap" the second element, but a third element can also be "interposed" between the first and second elements, or the first and second elements can "be connected or coupled to", "contact or overlap", etc. each other via a fourth element. Here, the second element may be included in at least one of two or more elements that "are connected or coupled to", "contact or overlap", etc. each other.

When time relative terms, such as "after," "subsequent to," "next," "before," and the like, are used to describe processes or operations of elements or configurations, or flows or steps in operating, processing, manufacturing methods, these terms may be used to describe non-consecutive or non-sequential processes or operations unless the term "directly" or "immediately" is used together.

In addition, when any dimensions, relative sizes etc. are mentioned, it should be considered that numerical values for elements or features, or corresponding information (e.g., level, range, etc.) include a tolerance or error range that may be caused by various factors (e.g., process factors, internal or external impact, noise, etc.) even when a relevant description is not specified. Further, the term "may" fully encompasses all the meanings of the term "can".

Hereinafter, various embodiments of the present disclosure will be described in detail with reference to accompanying drawings.

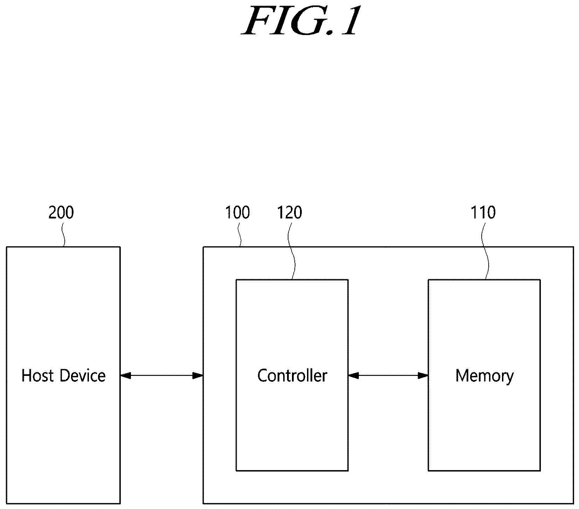

FIG. 1 is a diagram illustrating a configuration of a storage device 100 according to the embodiments of the present disclosure.

Referring to FIG. 1, the storage device 100 according to embodiments of the present disclosure may include at least one memory 110. The storage device 100 may include a controller 120 which controls the operation of the memory 110.

For example, the memory 110 may be a volatile memory such as DRAM, SDRAM, DDR SDRAM, or LPDDR SDRAM, but embodiments of the present disclosure are not limited thereto. The memory 110 may be a non-volatile memory such as NAND flash memory, 3D NAND flash memory, or Noah flash memory. Additionally, in some cases, part of the memory 110 included in the storage device 100 may be volatile memory, and another part may be non-volatile memory.

In addition, the memory 110 may be one of various types of memory, such as a resistive RAM, a phase change memory, a magnetoresistive memory, a ferroelectric memory, or spin injection magnetization reversal memory. In addition, the memory 110 may, in some cases, be a processing-in-memory having an arithmetic function or a data processing function.

The memory 110 may include a plurality of storage blocks. Each of the plurality of storage blocks may include a plurality of memory cells.

The controller 120 may receive a command from the outside and control the operation of the memory 110 based on the received command. In addition, the controller 120 may control the operation of the memory 110 based on internally created commands. In this specification, a command which the controller 120 receives from the outside may be referred to as an external command, and an internally created command in the controller 120 may be referred to as an internal command.

The controller 120 may control the operation of the memory 110 based on external commands or internal commands. As an example, the controller 120 may control the operation of writing data to the memory 110. The controller 120 may control the operation of reading data written to the memory 110. Data may be transmitted and received between the controller 120 and the memory 110.

Depending on the type of memory 110, the controller 120 may control a data preservation operation (e.g., refresh operation, patrol scrub operation, etc.) or erase operation for data written to the memory 110.

The controller 120 may control the operation of the memory 110 based on commands received from an external host device 200. The controller 120 may provide processing results according to operations corresponding to commands to the host device 200. The controller 120 may transmit data or a response signal to the host device 200.

The host device 200 may be, for example, a computer, an ultra-mobile PC (UMPC), a workstation, a personal digital assistant (PDA), a tablet, a mobile phone, a smartphone, an e-book, or a portable multimedia player (PMP), a portable game console, a navigation device, a black box, a digital camera, a digital multimedia broadcasting (DMB) player, a smart television, a digital voice recorder, a digital voice player, a digital video recorder, a digital video player, a digital video recorder, a digital video player, a storage for a data center, one of the various electronic devices for a home network, one of the various electronic devices for a telematics network, a radio frequency identification (RFID) device, and a mobile device capable of driving under human control or autonomously (e.g. vehicles, robots, drones). Alternatively, the host device 200 may be a virtual/augmented reality device that provides two-dimensional or three-dimensional virtual reality images or augmented reality images. The host device 200 may be any of various electronic devices that require a storage device 100 capable of storing data.

The host device 200 may include at least one operating system. The operating system may generally manage and control the functions and operations of the host device 200 and control mutual operations between the host device 200 and the storage device 100. The operating system may be divided into a general operating system and a mobile operating system depending on the mobility of the host device 200.

The controller 120 and the host device 200 may be separate devices. In some cases, the controller 120 and the host device 200 may be integrated and implemented as one device, or some components or functions of the controller 120 may be included and implemented in the host device 200. Hereinafter, for convenience of description, embodiments in which the controller 120 and the host device 200 are separate devices will be described.

The controller 120 may perform a background operation associated with the memory 110 based on external commands received from the host device 200 or based on internal commands in order to maintain and improve the operating performance of the storage device 100. The background operation may include, for example, one or more of garbage collection, wear leveling, read reclaim, or bad block management operations.

The controller 120 may prevent the operating performance of the storage device 100 from being deteriorated by controlling the background operation. In addition, the controller 120 may control the background operation differently depending on the usage environment of the storage device 100 to maintain the reliability of the operation of the storage device 100 according to the usage environment and improve the operating performance of the storage device 100.

The controller 120 may also perform operation control based on commands received from the host device 200 differently depending on the usage environment. For example, the controller 120 may adjust the control method for the operation of the memory 110 based on usage environment information obtained when booting the storage device 100.

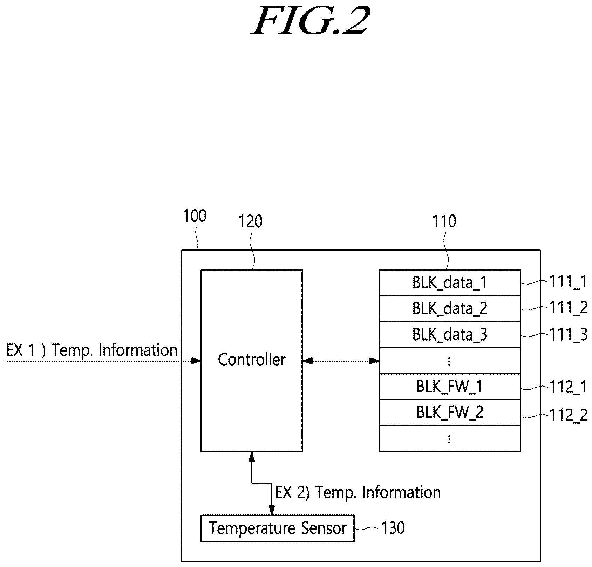

FIG. 2 is a diagram illustrating a storage block included in the memory 110 of a storage device 100 and an operation method during booting, according to embodiments of the present disclosure.

Referring to FIG. 2, the memory 110 of the storage device 100 may include a plurality of storage blocks. Each of the plurality of storage blocks may include a plurality of memory cells. A plurality of memory cells may constitute a page, and a plurality of pages may constitute a storage block. A plurality of storage blocks may constitute a plane. Each of the plurality of storage blocks may mean an area divided by the unit in which data is written, or may mean an area divided according to physical size.

The plurality of storage blocks may include a plurality of data storage blocks and at least one firmware storage block. As an example, the plurality of data storage blocks may include a first data storage block 111_1, a second data storage block 111_2, a third data storage block 111_3, etc. For example, at least one firmware storage block may include a first firmware storage block 112_1, a second firmware storage block 112_2, etc.

The data storage block may be an area where user data according to a request from the host device 200 is stored. The firmware storage block may be an area where firmware executed for the operation of the storage device 100 is stored. The firmware storage block may be an area accessible by the controller 120, but non-accessible by the host device 200.

The controller 120 may control the operation of the storage device 100 by reading and executing the firmware stored in the firmware storage block. As an example, the controller 120 may read a firmware from a firmware storage block during booting and perform booting based on the read firmware. The controller 120 may control the operation of the memory 110 based on the running firmware and may control the operation of the memory 110 by driving different firmware depending on the usage environment.

As an example, a first firmware may be stored in the first firmware storage block 112_1 of the memory 110. A second firmware may be stored in the second firmware storage block 112_2 of the memory 110.

The controller 120 may determine which firmware to be read based on usage environment information during booting or when controlling the operation of the memory 110 by reading firmware. The usage environment information may include at least one of external or internal surrounding information of the storage device 100, or status information. The usage environment information may include at least one of temperature information, pressure information, operation mode information, or load state information according to operation of the storage device 100. In addition, the usage environment information is not limited to the examples described above and may include at least one of various types of information which may affect the operating performance of the storage device 100.

As an example, the controller 120 may acquire temperature information upon booting and select firmware to be run based on the acquired temperature information. The controller 120 may receive temperature information from the outside during booting. As an example, the controller 120 may receive temperature information from the host device 200. Alternatively, the controller 120 may obtain temperature information from inside the storage device 100. As an example, the storage device 100 may include a temperature sensor 130. The controller 120 may obtain temperature information through the temperature sensor 130 when booting.

In addition, the controller 120 may acquire usage environment information other than temperature information. As an example, the controller 120 may acquire pressure information through a sensor located inside the host device 200 or the storage device 100. The above-described temperature information and pressure information are examples, and the usage environment information may include environment information which may affect the operating state of the storage device 100 depending on the usage environment of the storage device 100.

The controller 120 may select firmware to be used when booting based on the acquired temperature information.

As an example, if the temperature information is within a first range, the controller 120 may perform booting by reading the first firmware stored in the first firmware storage block 112_1. If the temperature information is within a second range, the controller 120 may read the second firmware stored in the second firmware storage block 112_2 and perform booting. The second range may not overlap with the first range. The second range may be a range other than the first range or may be a range including at least a part of the range other than the first range.

The controller 120 may perform the control by setting the operation priority of the storage device 100 differently when booting is performed using the first firmware and when booting is performed using the second firmware.

As an example, if the temperature information is included in the first range, the temperature information may correspond to room temperature. The first range may refer to a case where the usage environment of the storage device 100 corresponds to a general usage environment.

If the temperature information is included in the first range, that is, when booting is performed by reading the first firmware, the controller 120 may determine that the usage environment of the storage device 100 corresponds to a general usage environment and control the memory 110 by setting priority to a control method capable of increasing the performance of the storage device 100.

Since the usage environment of the storage device 100 is considered to be a stable usage environment, the controller 120 may control the operation of the memory 110 by giving priority to performance over the reliability of the storage device 100. As an example, the controller 120 may control the operation of the memory 110 to minimize processing delay time for a command of the host device 200.

As another example, if the temperature information is included in the second range, the temperature information may correspond to high or low temperature. In the case of pressure information rather than temperature information, the second range may refer to high pressure or low pressure.

If the temperature information is included in the second range, that is, when the controller 120 reads the second firmware and performs booting, the usage environment of the storage device 100 may correspond to an extreme usage environment. Therefore, the memory 110 may be controlled by giving priority to a control method capable of increasing the stability of the storage device 100.

As an example, the controller 120 may prioritize control to maintain the operational stability of the memory 110 without considering the processing delay time for the command of the host device 200.

As an example, the controller 120 may process a background operation control to maintain the stability of the memory 110 with priority over commands from the host device 200. Additionally, the controller 120 may increase the time required to detect and correct errors that may occur when controlling the operation of the memory 110.

The controller 120 may perform booting by reading different firmware according to temperature information and change the priority and method of operations controlled by the controller 120 according to each firmware, thereby improving the performance of the storage device 100 depending on the usage environment.

In addition, as described above, embodiments of the present disclosure may be applied not only to temperature information but also to the case of using usage environment information which may affect the operating performance of the storage device 100. The usage environment information may be divided into a general usage environment and an unusual usage environment, and in some cases, the unusual usage environment may be divided into two or more ranges.

Hereinafter, for convenience of description, it will be described an example in which the storage device 100 operates differently depending on temperature information. However, embodiments of the present disclosure may be also applied to a case using various usage environmental information which may affect the operating performance of the storage device 100.

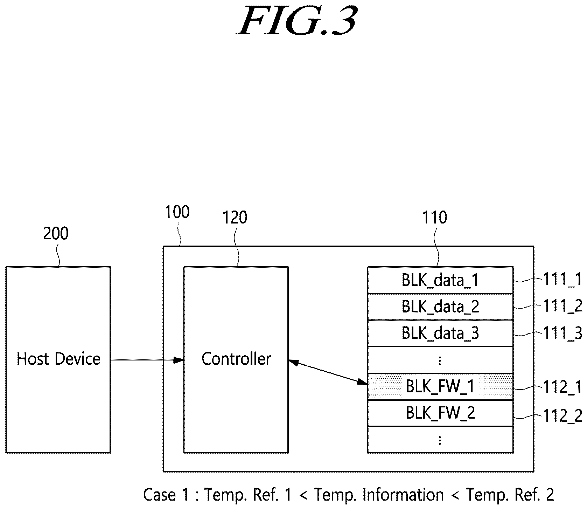

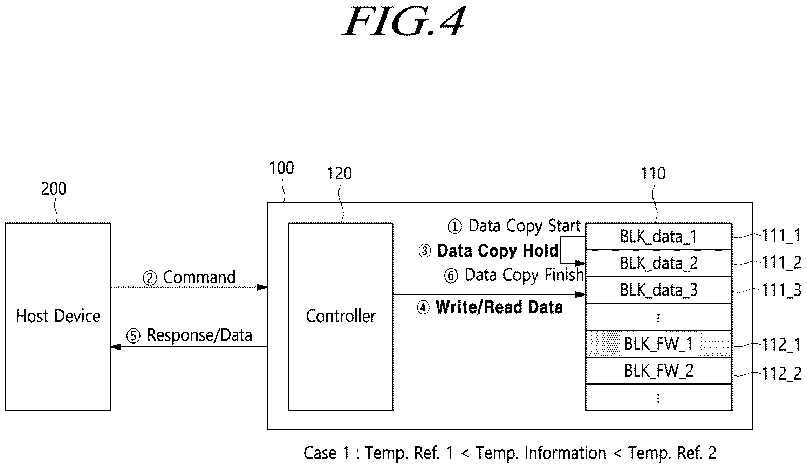

FIGS. 3 and 4 are diagrams illustrating booting and operating methods of a storage device 100 in a first temperature range according to embodiments of the present disclosure.

Referring to FIG. 3, the controller 120 may acquire temperature information upon booting. The temperature information may be received from outside or inside.

If the temperature information is included in the first range defined by a first reference temperature and a second reference temperature, the controller 120 may read the first firmware stored in the first firmware storage block 112_1. The first reference temperature and the second reference temperature may be a temperature capable of defining a temperature range in which the storage device 100 may operate without its operating performance being affected by the surrounding temperature, such as room temperature.

The controller 120 may perform booting using the first firmware and operate in a first mode. The controller 120 may perform control according to commands received from the host device 200. Additionally, the controller 120 may control the performance of a background operation associated with the memory 120.

The controller 120 may perform a background operation at a specific time or period. The controller 120 may perform a background operation if the conditions for performing the background operation are satisfied.

The background operation may refer to an operation to maintain the reliability of the memory 110 and increase operation efficiency, such as a garbage collection operation, a read reclaim operation, etc.

The garbage collection operation may refer to an operation of creating a new free storage block by copying a data storage block with relatively little valid data among a plurality of data storage blocks included in the memory 110 to another data storage block. The data storage block selected to be changed to a free storage block may be referred to as a victim storage block, and the data storage block to which the data of the victim storage block is copied may be referred to as a target storage block.

The read reclaim operation may refer to an operation of copying data written to a data storage block in which the number of read operations is above a specific level among a plurality of data storage blocks included in the memory 110 to another data storage block. If the number of read operations for a specific data storage block exceeds a specific level, this may increase the number of errors occurrence or the number of uncorrectable errors during the read operation for the corresponding data storage block. By copying the data written to this specific data storage block to another data storage block in advance, this may prevent the stability of the read operation from deteriorating.

In addition to the examples described above, there may be another example of a background operation performed by the controller 120. In addition, the controller 120 may process a command received from the host device 200 considering a processing delay time while performing a background operation.

As an example, referring to FIG. 4, the controller 120 may perform a background operation while operating in the first mode after booting with the first firmware. For example, the controller 120 may perform a garbage collection operation or a read reclaim operation.

The controller 120 may perform an operation of copying data written in a specific data storage block to another data storage block according to a background operation.

As an example, the controller 120 may perform an operation of copying data written in the first data storage block 111_1 to the second data storage block 111_2 (①).

If the controller 120 performs a garbage collection operation, the first data storage block 111_1 may be a victim storage block and the second data storage block 111_2 may be a target storage block. When the controller 120 performs a read reclaim operation, the first data storage block 111_1 may be a data storage block in which the number of read operations is more than a preset number of times, and the second data storage block 111_2 may be a data storage block in which the number of read operations is less than the preset number of times.

The controller 120 may receive a command from the host device 200 while performing a background operation (②). The command received from the host device 200 may be, for example, a write or read command.

If the controller 120 receives a command from the host device 200, the controller 120 may hold or temporarily stop data copying according to the background operation to process the command (③).

The controller 120 may perform an operation according to a command of the host device 200, for example, the controller 120 may perform an operation of writing data to the third data storage block 111_3 or an operation to read the data written in the third data storage block 111_3 (④).

After processing the command, the controller 120 may transmit a response signal or transmit data to the host device 200 (⑤).

The controller 120 may re-perform the background operation which was temporarily stopped after processing the command of the host device 200. The controller 120 may complete the data copy operation according to the background operation (⑥).

In the case that the usage environment of the storage device 100 corresponds to a general usage environment, if the preset time or condition is satisfied and a command is received from the host device while performing a background operation, the controller 120 may process a command with priority over the background operation.

The controller may perform a background operation capable of increasing the stability and efficiency of the operation of the storage device 100, thereby minimizing a processing delay time for the command of the host device 200. The storage device 100 may provide high operating performance to the host device 200 in a general usage environment.

If the temperature information is not included in the first range, the controller 120 may perform booting using other firmware and control the operation of the memory 110.

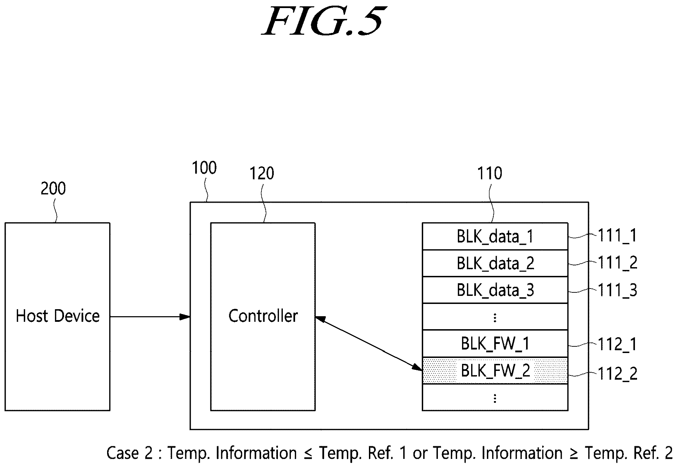

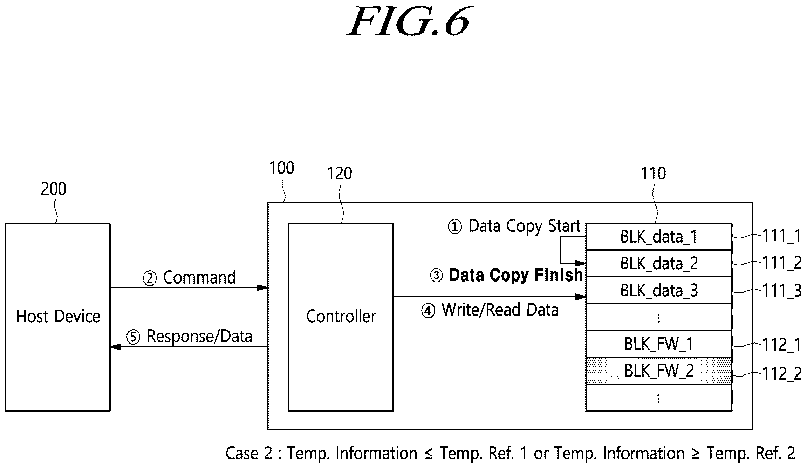

FIGS. 5 and 6 are diagrams illustrating booting and operating methods of a storage device 100 in a second temperature range, according to embodiments of the present disclosure.

Referring to FIG. 5, the controller 120 may acquire temperature information at booting and select firmware to be used at booting based on the temperature information. For example, if the temperature information is below the first reference temperature or above the second reference temperature, the controller 120 may perform booting by reading the second firmware stored in the second firmware storage block 112_2.

If the temperature information is below the first reference temperature or above the second reference temperature, the temperature information may be considered to be included in the second range, and the second range may mean a range corresponding to an extreme usage environment such as high or low temperatures.

In addition, in some cases, there may be set a third range other than the first range and the second range. The third range may be a range which does not overlap with the first range and the second range. The controller 120 may read other firmware and perform booting, depending on whether the temperature information is included in the first to third ranges.

If the temperature information is included in the second range, the controller 120 may read the second firmware, perform booting, and operate in the second mode. The second mode may refer to a mode in which control for maintaining the stability of the storage device 100 is preferentially performed compared to the first mode.

The controller 120 may operate in the second mode and process a command received from the host device 200. The controller 120 may perform a background operation when a preset time or condition is satisfied in the second mode. In the second mode, the controller 120 may perform a command processing and control a background operation of the host device 200 with priority placed on maintaining the stability of the storage device 100.

As an example, referring to FIG. 6, the controller 120 may perform a background operation when a preset time or condition is satisfied while operating in the second mode. The controller 120 may control the operation of copying data written in the first data storage block 111_1 to the second data storage block 111_2 according to a background operation (①). The background operation may be any of the above-described garbage collection operation and the read reclaim operation, but the embodiments are not limited thereto.

The controller 120 may receive a command from the host device 200 while performing a background operation (②).

The controller 120 may complete the background operation before processing the command received from the host device 200 (③). The completion of the background operation by the controller 120 may mean completing the background operation as a whole or may mean completing a specific unit of the background operation.

For example, in case of performing a garbage collection operation, the completion of the background operation may mean that the controller 120 creates all victim storage blocks selected through the garbage collection operation as free storage blocks. Alternatively, the completion of the background operation may mean that the controller 120 creates one victim storage block among all victim storage blocks selected through the garbage collection operation as the free storage block.

The controller 120 may complete at least a certain portion of the background operation without stopping the background operation being performed upon receiving a command from the host device 200.

The controller 120 may process the command from the host device 200 after completing the background operation. For example, the controller 120 may control the operation of writing data to the third data storage block 111_3 or reading data written to the third data storage block 111_3 according to a command of the host device 200 (④).

After processing the command of the host device 200, the controller 120 may transmit data or a response signal to the host device 200 (⑤).

Since the controller 120 completes the background operation and then processes the command after receiving the command from the host device 200, the processing delay time for the command from the host device 200 may increase.

Even if the processing delay time for the command of the host device 200 increases, the controller 120 may prioritize the background operation for the operation stability of the storage device 100.

Since a garbage collection operation is performed by the controller 120 to create a free storage block, or a read reclaim operation is performed to copy data in a data storage block with a specific number of read operations or more to another data storage block, it is possible to prevent or minimize the case where the storage device 100 does not operate stably when processing a command of the host device 200 thereafter.

Since the background operations are processed with priority over the commands of the host device 200 while the controller 120 operates in the second mode, the processing delay time for a commands of the host device 200 in the second mode may be greater than the processing delay time for a command of the host device 200 in the first mode.

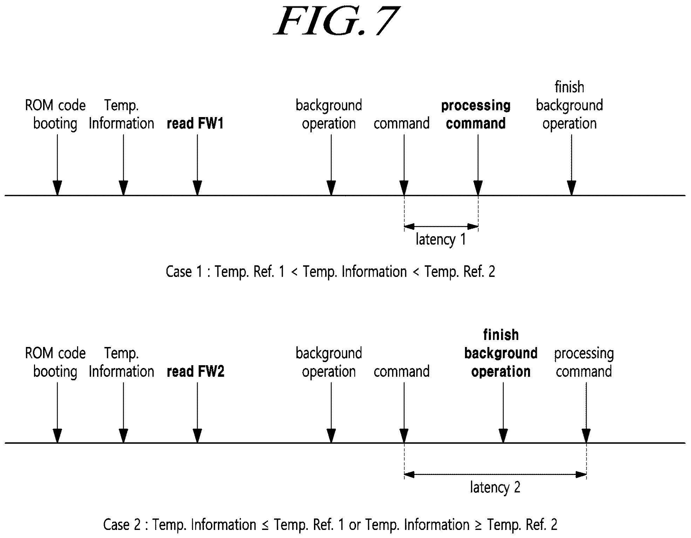

FIG. 7 is a diagram illustrating a comparison of booting and operating methods of a storage device 100 according to embodiments of the present disclosure in a first temperature range and a second temperature range.

Referring to FIG. 7, the controller 120 may perform a ROM code booting using a ROM code stored in an internal ROM. The controller 120 may acquire temperature information after performing the ROM code booting. The controller 120 may acquire the temperature information from the host device 200 or may acquire the temperature information from inside the storage device 100.

If the acquired temperature information is included in a first (temperature) range, the controller 120 may read a first firmware from the memory 110. The controller 120 may read a second firmware from the memory 110 if the acquired temperature information is included in a second (temperature) range.

The controller 120 may operate in the first mode if booting is performed by reading a first firmware. The controller 120 may operate in a second mode if booting is performed by reading the second firmware.

The controller 120 may perform the background operation when needed in the first mode and the second mode.

The controller 120 may receive a command from the host device 200 while performing a background operation in the first mode and the second mode.

When operating in the first mode, the controller 120 may process a command from the host device 200 with priority over a background operation. In the first mode, the processing delay time for the command of the host device 200 may be a first processing delay time.

When operating in the second mode, the controller 120 may process a background operation with priority over a command from the host device 200. In the second mode, the processing delay time for the command of the host device 200 may be a second processing delay time.

The second processing delay time in the second mode may be greater than the first processing delay time in the first mode.

Depending on the temperature information acquired when booting the storage device 100, the booting may be performed by reading different firmware and operating in a mode with a different priority of operation. Therefore, a background operation or a command of the host device 200 may be processed with the different priority depending on the usage environment.

In addition, in some cases, two or more temperature ranges other than a normal (general) temperature range may be set separately. For example, ranges other than the first range may be divided into a second range and a third range. The third range may be, for example, a range between the first range and the second range.

If the temperature information corresponds to the third range, the controller 120 may read a third firmware, perform booting, and operate in a third mode. The controller 120 may process a command from the host device 200 received while performing a background operation in the third mode. In the third mode, the processing delay time for the command of the host device 200 may be a third processing delay time. The third processing delay time may be, for example, greater than the first processing delay time and less than the second processing delay time.

As described above, the usage environment information, such as temperature information, may be divided into a plurality of sections, and the booting and operation of the storage device 100 may be controlled using different firmware for each section. Depending on the usage environment, there may be adjusted the processing order or priority processing ratio of an operation for the stability of the storage device 100, such as a background operation, and an operation for processing commands of the host device 200.

In addition, in some cases, the controller 120 may control the operation of the memory 110 by changing the mode according to changes in usage environment information during operation. The priorities of the commands and background operations of the host device 200 may be adjusted and the operation of the storage device 100 may be controlled.

In this case, a reference value of the temperature range for the mode change may be different from a reference value at booting. For example, if temperature information during operation in the first mode falls below a reference value lower than the first reference temperature, the controller 120 may change to the second mode to perform control. If temperature information exceeds a reference value higher than the second reference temperature while operating in the first mode, the controller 120 may change to the second mode and perform control.

In the above description, the background operation is an example, and depending on the usage environment, an operation for increasing an operation stability of the storage device 100 may be processed with priority over an operation of processing a command from the host device 200.

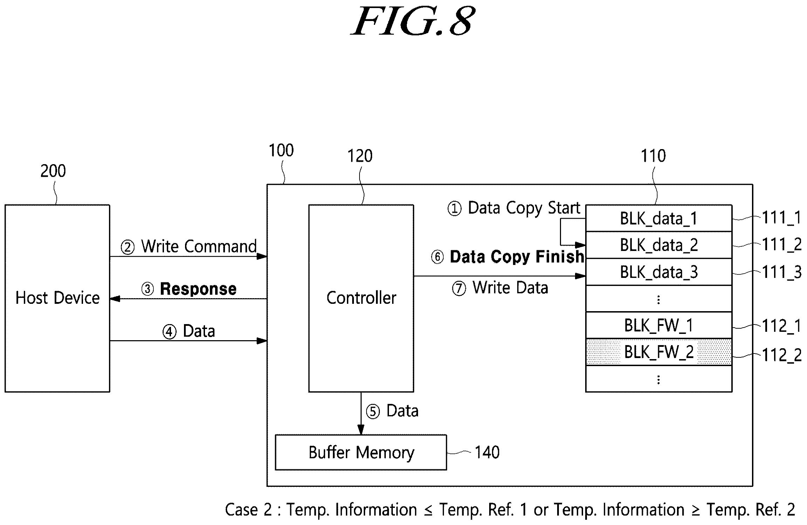

FIG. 8 is a diagram illustrating processing a write command of a storage device 100 in a second mode according to embodiments of the present disclosure.

Referring to FIG. 8, there is illustrated a case in which the storage device 100 operates in the second mode. The controller 120 of the storage device 100 may acquire temperature information during booting. If the temperature information is within the second range, the controller 120 may read the second firmware stored in the second firmware storage block 112_2 and perform booting. The controller 120 may operate in the second mode and control the memory 110.

The controller 120 may perform a background operation, such as a garbage collection operation or a read reclaim operation in the second mode. For example, the controller 120 may copy data written in the first data storage block 111_1 to the second data storage block 111_2 according to the performance of a background operation (①).

The controller 120 may receive a write command from the host device 200 while performing a background operation (②). The controller 120 may transmit a response signal corresponding to the write command of the host device 200 to the host device 200 (③).

The controller 120 may receive data to be written from the host device 200 after transmitting a response signal (④). The controller 120 may store the received data in a buffer memory 140 included in the storage device 100 (⑤).

The buffer memory 140 may be a volatile memory such as SRAM or DRAM, but the embodiments are not limited thereto. The buffer memory 140 may be located outside the controller 120, as in the embodiment shown in FIG. 8 or may be located inside the controller 120.

The controller 120 may store data which is the target of a write command in the buffer memory 140 and perform a background operation. In some cases, a background operation may be performed while a response signal is transmitted to the host device 200 and the received data is stored in the buffer memory 140.

The controller 120 may complete the background operation being performed upon receiving a command from the host device 200 (⑥). The controller 120 may write the data stored in the buffer memory 140 to the memory 110 after completing the background operation (⑦). As an example, the controller 120 may write corresponding data to the third data storage block 111_3.

In some cases, the controller 120 may transmit a response signal corresponding to the write command of the host device 200 to the host device 200 after completing the background operation.

Alternatively, as in the above-described embodiment, the controller 120 may first transmit a response signal to the host device 200 before completing the background operation, store the data to be written in the buffer memory 140, and then perform the background operation. Since the data stored in the buffer memory 140 is written to the memory 110 after completing the background operation, it is possible to reduce the delay corresponding to the time for receiving data from the host device 200.

Even when operating in the first mode, the controller 120 may store data to be written in the buffer memory 140 and then write the data to the memory 110. If an interval between a time data to be written is stored in the buffer memory 140 and a time the corresponding data is written to the memory 110 is referred to as a waiting time, a waiting time in the second mode may be greater than a waiting time in the first mode.

The operation stability of the storage device 100 may be improved by processing the background operation with priority over the write command of the host device 200. In addition, the delay at the time the write command processing is completed may be reduced as much as possible to minimize the deterioration in the operating performance of the storage device 100 provided to the host device 200.

In addition, the controller 120 may differently process the read command of the host device 200 in each mode according to temperature information.

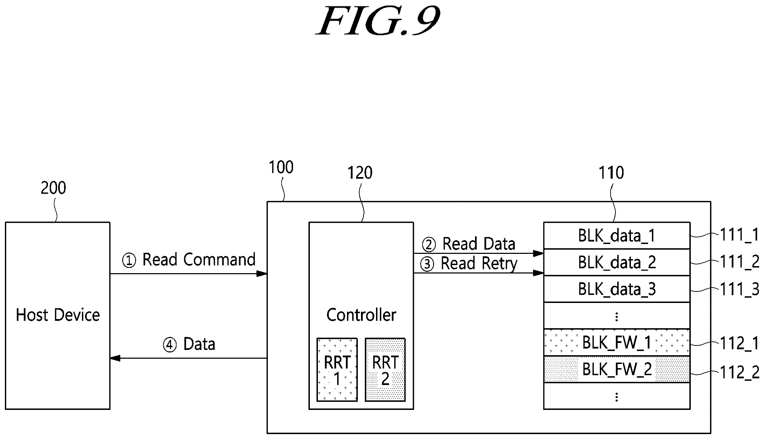

FIG. 9 is a diagram illustrating processing a read command of a storage device 100 in a first mode and a second mode according to embodiments of the present disclosure.

Referring to FIG. 9, the controller 120 may perform booting by reading a first firmware or a second firmware based on temperature information during booting. The controller 120 may read the first firmware to operate in the first mode or read the second firmware to operate in the second mode.

The controller 120 may receive a read command from the host device 200 while operating in the first mode or the second mode (①).

The controller 120 may read data from the memory 110 according to the received read command. As an example, the controller 120 may read data written in the second data storage block 111_2 (②).

If the read operation fails, the controller 120 may perform a read retry operation (③). The controller 120 may read data through a read retry operation and provide the read data to the host device 200 (④).

The controller 120 may control the read retry operation by varying the delay time according to the read retry operation when performing the read retry operation in the first mode and the second mode.

As an example, if a read operation fails in the first mode, the controller 120 may perform a read retry operation using a first read retry table RRT1. The controller 120 may perform a read retry operation using a second read retry table RRT2 if the read operation fails in the second mode.

The first read retry table RRT1 and the second read retry table RRT2 may provide a list of read voltages which can be used when a read operation fails. The controller 120 may perform a read retry operation using the read voltage included in the read retry table.

For example, the read retry table may be stored in the memory 110 and may be loaded and used in the cache or buffer memory 140 inside the controller 120 during operation.

The read retry table may include a plurality of preset read voltages or may include read voltages updated according to an operation history of the memory 110.

The controller 120 may perform a read retry operation using a read retry table. The first read retry table RRT1 used in the first mode and the second read retry table RRT2 used in the second mode may be set differently.

As an example, a size or number of the second read retry table RRT2 may be different from a size or number of the first read retry table RRT1. The size or number of the second read retry table RRT2 may be greater than the size or number of the first read retry table RRT1. In some cases, the size of the second read retry table RRT2 may be different from the size of the first read retry table RRT1, and also the number of the second read retry table RRT2 may be different from the size of the first read retry table RRT1.

The controller 120 may perform a read retry operation in the second mode using a larger number of read voltages than in the first mode.

Alternatively, the second read retry table RRT2 may include the first read retry table RRT1. The first read retry table RRT1 may be a part of the second read retry table RRT2.

In the first mode, the controller 120 may perform a read retry operation using only a read voltage of the first read retry table RRT1, which corresponds to a part of the entire read retry table. In the second mode, the controller 120 may perform a read retry operation using a read voltage of the second read retry table RRT2 corresponding to the entire read retry table.

The number of read retry operations performed in case of a failure of the read operation in the second mode may be greater than the number of read retry operations performed in case of a failure of the read operation in the first mode.

In the usage environment such as high or low temperatures, the reliability of the read operation may be prevented or reduced by increasing the number of the read retry operations when the read operation fails.

Since the read retry table used in the second mode is set differently or the number of read retry operations performed increases, this may increase the processing delay time for the read command of the host device 200. The processing delay time for the read command in the second mode may be greater than the processing delay time for the read command in the first mode.

Accordingly, in embodiments of the present disclosure, the booting may be performed by reading the first firmware or the second firmware depending on the temperature information or usage environment information, so that it is possible to perform an operation control suitable for the usage environment. In addition, embodiments of the present disclosure may store backups of the first firmware and the second firmware and use them when booting fails.

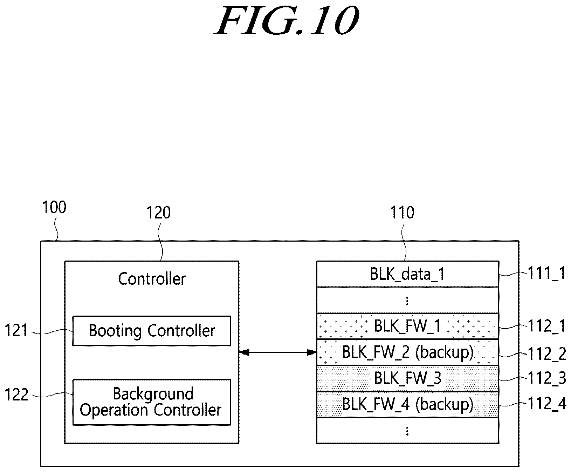

FIG. 10 is a diagram illustrating another storage block included in the memory 110 of a storage device 100 and a configuration of a controller 120 according to embodiments of the present disclosure.

Referring to FIG. 10, the memory 110 of the storage device 100 may include a plurality of data storage blocks and a plurality of firmware storage blocks.

The plurality of firmware storage blocks may include, for example, a first firmware storage block 112_1, a second firmware storage block 112_2, a third firmware storage block 112_3, a fourth firmware storage block 112_4 etc.

A first firmware may be stored in the first firmware storage block 112_1. A first backup firmware may be stored in the second firmware storage block 112_2. The first backup firmware may be the copy data corresponding to a backup of the first firmware.

A second firmware may be stored in the third firmware storage block 112_3. A second backup firmware may be stored in the fourth firmware storage block 112_4. The second backup firmware may be the copy data corresponding to a backup of the second firmware.

The controller 120 may perform booting using the above-described firmware depending on temperature information and whether the booting operation is successful.

For example, the controller 120 may include a booting controller 121 and a background operation controller 122.

The booting controller 121 may acquire temperature information after performing a ROM code booting. The booting controller 121 may perform booting by reading the first firmware or the second firmware depending on the temperature information.

As an example, if the temperature information is within a first range, the booting controller 121 may perform booting by reading the first firmware stored in the first firmware storage block 112_1. If the temperature information is within a second range, the booting controller 121 may perform booting by reading the second firmware stored in the third firmware storage block 112_3.

If booting using the first firmware fails, the booting controller 121 may perform booting by reading the first backup firmware stored in the second firmware storage block 112_2. If booting using the second firmware fails, the booting controller 121 may perform booting by reading the second backup firmware stored in the fourth firmware storage block 112_4.

In some cases, the booting controller 121 may perform booting using the second firmware if booting using the first backup firmware also fails. The booting controller 121 may perform booting using the first firmware if booting using the second backup firmware also fails. Since the booting controller 121 performs booting using a plurality of firmware according to usage environment information, it is possible to minimize cases where booting is not performed normally due to a failure in the booting operation.

The background operation controller 122 of the controller 120 may control the background operation according to the mode set when booting by the booting controller 121 is completed.

When operating in the first mode, the background operation controller 122 may control the background operation so that a command of the host device 200 will be processed with priority over the background operation. When operating in the second mode, the background operation controller 122 may control the background operation so that the background operation will be processed with priority over a command of the host device 200.

According to embodiments of the present disclosure, the processing delay time for a command of the host device 200 may be varied according to the usage environment information of the storage device 100, and a background operation or a read/write operation according to a command may be differently controlled, so that the storage device 100 may be controlled while improving the operation stability and reliability of the storage device 100.

Based on embodiments of the present disclosure described above, the operation delay time of the memory system may be advantageously reduced or minimized. In addition, based on embodiments of the present disclosure, an overhead occurring in the process of calling a specific function may be advantageously reduced or minimized. Although various embodiments of the present disclosure have been described with particular specifics and varying details for illustrative purposes, those skilled in the art will appreciate that various modifications, additions and substitutions may be made based on the embodiments disclosed or illustrated in the present disclosure without departing from the spirit and scope of the invention as defined in the following claims. Furthermore, the embodiments may be combined to form additional embodiments.

## Claims

1. A storage device comprising:
at least one memory including a plurality of data storage blocks and at least one firmware storage block storing a plurality of firmwares; and
a controller configured to
acquire temperature information,
when the temperature information is within a first range, read a first firmware among the plurality of firmwares, perform booting, and operate in a first mode, and
when the temperature information is within a second range different from the first range, read a second firmware among the plurality of firmwares, perform booting, and operate in a second mode.

2. The storage device of claim 1,
wherein the controller is configured to control performance of a background operation, and
wherein a second processing delay time required to process an external command received while performing the background operation in the second mode is greater than a first processing delay time required to process an external command received while performing the background operation in the first mode.

3. The storage device of claim 2, wherein the controller is configured to read a third firmware among the plurality of firmwares, perform booting, and operate in a third mode when the temperature information is within a third range different from the first range and the second range.

4. The storage device of claim 3, wherein a third processing delay time required to process an external command received while performing the background operation in the third mode is greater than the first processing delay time and is less than the second processing delay time.

5. The storage device of claim 1, wherein, when an external command is received while performing a background operation in the second mode, the controller is configured to process the external command after completing the background operation.

6. The storage device of claim 1, wherein, when an external command is received while performing a garbage collection operation in the second mode, the controller is configured to process the external command after completing a creation of a free storage block during the garbage collection operation.

7. The storage device of claim 1, wherein, when an external command is received while performing a read reclaim operation in the second mode, the controller is configured to process the external command after completing an operation of copying data written in a data storage block among the plurality of data storage blocks, which is a target of the read reclaim operation, to another data storage block among the plurality of data storage blocks.

8. The storage device of claim 1,
wherein, when a read operation corresponding to a read command externally received fails, the controller is configured to perform a read retry operation using a previously stored read retry table, and
wherein a size or number of a read retry table used in the second mode is greater than a size or number of a read retry table used in the first mode.

9. The storage device of claim 1,
wherein the controller is configured to perform a read retry operation when a read operation corresponding to a read command externally received fails, and
wherein a number of read retry operations performed in the second mode is greater than a number of read retry operations performed in the first mode.

10. The storage device of claim 1, wherein, when externally receiving a write command while performing a background operation in the second mode, the controller is configured to output a response signal corresponding to the write command, externally receive user data and store the user data in a buffer memory, and write the user data stored in the buffer memory to the at least one memory when the background operation is completed.

11. The storage device of claim 1, wherein the at least one firmware storage block is configured to further store a first backup firmware corresponding to the first firmware and a second backup firmware corresponding to the second firmware.

12. The storage device of claim 11, wherein the controller is configured to perform booting by reading the first backup firmware when booting using the first firmware fails, and perform booting by reading the second firmware when booting using the first backup firmware fails.

13. A storage device comprising:
at least one memory including a plurality of data storage blocks; and
a controller configured to control an operation of the at least one memory and perform a background operation,
wherein a first processing delay time required to process an external command received while performing the background operation in a first temperature range is less than a second processing delay time required to process an external command received while performing the background operation in a second temperature range different from the first temperature range.

14. The storage device of claim 13, wherein the controller is configured to perform booting by reading a first firmware in the first temperature range, and perform booting by reading a second firmware in the second temperature range, the first and second firmwares being stored in at least one firmware storage block included in the at least one memory.

15. The storage device of claim 13, wherein the controller is configured to:
complete the background operation after processing the external command in the first temperature range: and
process the external command after completing the background operation in the second temperature range.

16. The storage device of claim 13,
wherein the controller is configured to:
store, in a buffer memory, user data according to a write command externally received while performing the background operation; and
write the user data to the at least one memory after a waiting time, and
wherein the waiting time in the second temperature range is greater than the waiting time in the first temperature range.

17. The storage device of claim 13,
wherein the controller is configured to perform a read retry operation when a read operation according to a read command externally received while performing the background operation, fails, and
wherein a number of read retry operations performed in the second temperature range is greater than a number of read retry operations performed in the first temperature range.

18. A controller comprising:
a booting controller configured to perform booting, based on status information of the memory, by reading a first firmware from a memory or by reading a second firmware from the memory; and
a background operation controller configured to control a background operation of the external memory.

19. The controller of claim 18, wherein the booting controller is configured to acquire temperature information as the status information, perform booting by reading the first firmware when the temperature information is within a first temperature range, and perform booting by reading the second firmware when the temperature information is within a second temperature range different from the first temperature range.

20. The controller of claim 19,
wherein the background operation controller is configured to process an external command received during the background operation, and
wherein a processing delay time required to process an external command received during the background operation in the second temperature range is greater than a processing delay time required to process an external command received during the background operation in the first temperature range.
